# EUROPEAN PATENT APPLICATION

(11) **EP 1 906 632 A2**
(43) Date of publication of application: **02.04.2008**
(21) Application number: 07019300.8
(22) Date of filing: 01.10.2007
(51) Int. Cl.: H04M 1/22

(54) **Mobile phone with illuminated touch screen**

(30) Priority: 29.09.2006 KR 20060095971; 16.03.2007 KR 20070026324
(71) Applicant: LG Electronics Inc., Yongdungpo-Gu Seoul 150-010 (KR)
(72) Inventor: Joo, Won-Seok, Seongdong-Gu Seoul (KR); Lim, Seung-Geun, Youngdungpo-Gu, Seoul (KR); Kim, Young-Joong, Seodaemun-Gu, Seoul (KR)
(74) Representative: Katérle, Axel

(57) **Abstract**

A mobile terminal (100) includes an input device (110) which includes: a cover (101A) having at least one transmissive region; a touch board (130) disposed within the cover (101A) and sensing a touch applied to the cover; a plurality of light emitting units (121) mounted on the touch board (130); and an individual illumination unit (150) for turning on or off one or two or more of the light emitting units (131) by the touch to be seen at the transmissive region of the cover (101A). The plurality of light emitting units (131) and the individual illumination unit (150) for controlling the light emitting units (131) provide various discernible information to users, improving user convenience.

## Description

### BACKGROUND OF THE INVENTION

### 1. Field of the Invention

The present invention relates to a mobile terminal and, more particularly, to a mobile terminal with key illumination.

### 2. Description of the Related Art

A mobile terminal including a mobile phone or a PDA is one of mobile electronic devices allowing a user to wirelessly transmit or receive or read or process information while on the move.

The mobile terminals are required to provide a sufficient mechanical support to implement various functions within the small and limited device and an interface environment for allowing users to conveniently and easily use the functions.

The mobile terminal includes a keypad unit operable for operating a mounted function or performing an inputting operation, and in general, it uses an illumination system such as an LED to allow marks of keys to be used or manipulated in the dark to be properly seen.

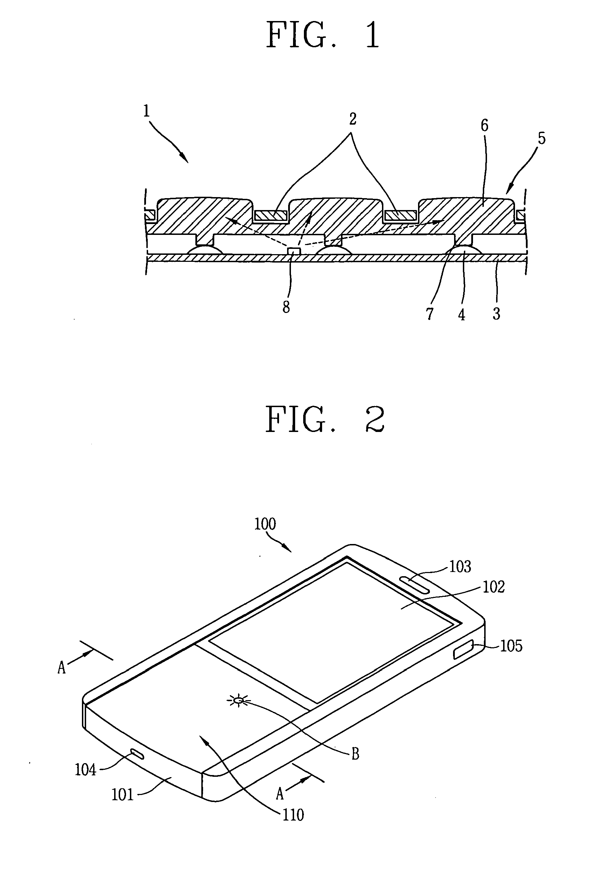

The related art will now be described with reference to FIG. 1. As shown in FIG. 1, a keypad unit 1 includes multiple keys 5. Each key 5 includes a dome switch 4 mounted on a board 3 and a key button 6 that operates the dome switch 4.

The key button 6 is supported by a terminal mechanism 2 so as not to be released therefrom, and a pressing protrusion 7 is formed at a lower surface of each key buttons 6 in order to press the dome switch 4.

A certain gap is formed between the key buttons 6 and the board 3, between which an LCD 8 is installed.

With such a construction, a user may press each key button 6 to operate a corresponding dome switch 4 to perform an inputting operation. Light emitted from the LED 8 illuminates all the key buttons 6, informing the user about positions of the respective keys 5 and marks of the key buttons 6 so that the user can easily recognize the keys 5 in the dark.

However, the related art keypad unit 1 is disadvantages in that because the LED 8 is devised only for backlighting of the keys 6, its utilization is degraded.

### SUMMARY OF THE INVENTION

One aspect of exemplary embodiments of the invention is to provide a mobile terminal capable of implementing diverse illumination effects as well as illuminating keys.

The present invention provides a mobile terminal according to one or more of the appended claims 1 to 27 and 33, 34. The present invention further provides an input device according to one or more of the appended claims 28 to 32.

In one embodiment, an input device includes: a cover having at least one transmissive region; a touch board disposed within the cover and sensing a touch applied to the cover; a plurality of light emitting units mounted on the touch board; and an individual illumination unit for turning on or off one or two or more of the light emitting units by the touch to be seen at the transmissive region of the cover.

The cover may include an input key for inputting information.

A print layer on which a character, a number of a symbol is printed to allow the input key to be recognized can be formed on a lower surface of the cover.

A character, a number or a symbol can be formed to be engraved or embossed at an upper or lower surface of the cover to allow the input key to be recognized.

A diffusion member for diffusing light of the light emitting units can be provided between the cover and the touch board.

The diffusion member can be formed as a double-sided adhesive tape that attaches the cover and the touch board.

The touch board may include through holes that can receive the light emitting units, and the light emitting units can be mounted at a lower portion of the touch board so as to be disposed to be at least partially received in the through holes.

The through holes can be filled with a transmissive material.

The light emitting units can be mounted on an upper surface of the touch board.

Receiving recesses that receive the light emitting units may be formed at a lower surface of the cover.

An intermediate member can be formed to surround the periphery of the respective light emitting units between the cover and the touch board to allow light of the light emitting units to be irradiated to a partial region.

The intermediate member may include a plate having through holes for providing a space in which the light emitting units are received; and a signal transmission member formed at an inner wall of the through hole and transferring an electrical signal generated by a touch applied to the cover to the touch board.

The light emitting units can be LEDs.

The light emitting units can be disposed in an MxN (M and N are natural numbers of 2 or greater) matrix form.

The individual illumination unit may include: a touch signal receiving unit that receives a signal of the touch board and fetches a corresponding position and a recognition value; an illumination pattern searching unit that fetches an illumination pattern of a light emitting unit corresponding to the signal fetched by the touch signal receiving unit; and an ON/OFF signal applying unit that applies an ON/OFF signal of light emissions corresponding to the illumination pattern.

The illumination pattern can be formed by one of position, ON/OFF time and brightness of the light emitting units or by a combination of them.

The light emitting units can be formed in such a form that they can implement multiple colors, and the discernment signal can be generated according to a combination of color, position, ON/OFF time and brightness of the light emitting units.

In another embodiment, a mobile terminal includes an input device mounted on a terminal body and inputting information, wherein the input device includes: a cover having at least one transmissive region; a touch board disposed within the cover and sensing a touch applied to the cover; a plurality of light emitting units mounted on the touch board; and an individual illumination unit for turning on or off one or two or more of the light emitting units by the touch to be seen at the transmissive region of the cover.

The individual illumination unit may change an illumination pattern of the light emitting units according to a usage mode.

The terminal body may include a microphone that receives a voice signal and the individual illumination unit may turn on or off the light emitting units selected according to the voice signal received by the microphone.

The terminal body may include an optical sensor or a camera that can receive a light signal, and the individual illumination unit may turn on or off a light emitting units selected by the light signal received by the optical sensor or the camera.

The terminal body may include a wireless communication module that can receive a radiowave signal, and the individual illumination unit may turn on or off the light emitting units selected according to the radiowave signal received by the wireless communication module.

In yet another embodiment, a mobile terminal includes: a terminal body having a display; a cover including an illumination unit disposed near the display and having at least one transmissive region; a touch board disposed within the cover and sensing a touch applied to the cover; a plurality of light emitting units mounted on the touch board; and an individual illumination unit for turning on or off one or two or more of the light emitting units by the touch to be seen at the transmissive region of the cover.

The light emitting units may be disposed along the edges of the display unit.

As used herein, an illumination state of a light emitting unit may be defined, e.g., by whether or not the light emitting unit is turned on (i.e. lit up), whether it is blinking or continuously lit up, and by the brightness and/or color of illumination. It is to be understood that the mentioned definition parameters for the illumination state are merely intended to be exemplary and by no means exhaustive.

### BRIEF DESCRIPTION OF THE DRAWINGS

The accompanying drawings illustrate embodiments of the invention and together with the description serve to explain the invention further.

In the drawings:
FIG. 1 is a sectional view showing a keypad unit of a mobile terminal according to the related art;
FIG. 2 is a perspective view of a mobile terminal according to a first exemplary embodiment of the present invention;
FIG. 3 is an exploded perspective view of an input device of the mobile terminal in FIG. 2;
FIG. 4 is a rear view of a touch board in FIG .3;
FIG. 5 is a sectional view taken along line A-A of the mobile terminal in FIG. 2;
FIG. 6 is a control block diagram of the input device according to the first exemplary embodiment of the present invention;
FIGs. 7A to 7D are conceptual views of providing a discernment signal to a user by key illumination according to the first exemplary embodiment of the present invention;
FIG. 8 is an exploded perspective view of an input device according to a second exemplary embodiment of the present invention;
FIG. 9 is a sectional view of the input device in FIG. 8;
FIG. 10 shows an operational state of the input device in FIG. 8;
FIG. 11 is an exploded perspective view of the input device according to a third exemplary embodiment of the present invention;
FIG. 12 is a perspective view of a slide type mobile terminal with an input device according to a fourth exemplary embodiment of the present invention;
FIGs. 13A and 13B show operational states of a keypad in FIG. 12;
FIG. 14 is a control block diagram of the keypad according to a fifth exemplary embodiment of the present invention; and
FIG. 15 is a perspective view of the mobile terminal with light emitting units disposed around its display unit according to the exemplary embodiment of the present invention.

### DETAILED DESCRIPTION OF THE INVENTION

An input device and a mobile terminal having the same according to the present invention will now be described in detail with reference to the accompanying drawings.

FIG. 2 is a perspective view of a mobile terminal according to a first exemplary embodiment of the present invention. As shown in FIG. 2, the mobile terminal 100 includes a terminal body 101 and an input device 110 is disposed at a front side of a lower portion of the terminal body 101. A display unit 102 for displaying visual information is installed at an upper side of the input device 110. The display 102 visually displays a number or a character inputted through the input device 110 or shifting of a cursor or a pointer. The input device 110 and the display unit 102 may not be necessarily disposed to be close and can be disposed on mutually different surfaces depending on configuration and structure of the mobile terminal.

The input device 110 may have a lighting (illumination) effect that can be recognized by a user by lighting a changeable position or region. For example, in FIG. 2, a key illumination (B) in the form of a glow of a firefly is implemented at a particular position of the input device 110. A substantial implementation form of the input device 110 will be described later.

A speaker 103 and a microphone 104 can be installed at upper and lower end portions of the mobile terminal 100 and connected with an internal wireless communication module to allow the user to perform call communication while on the move. An optical sensor 105 that can detect light from the exterior can be provided at one side of the terminal body 101. The microphone 104 or the optical sensor 105 may provide an illumination effect to the user through the input device 110 in response to an external voice signal or an optical signal.

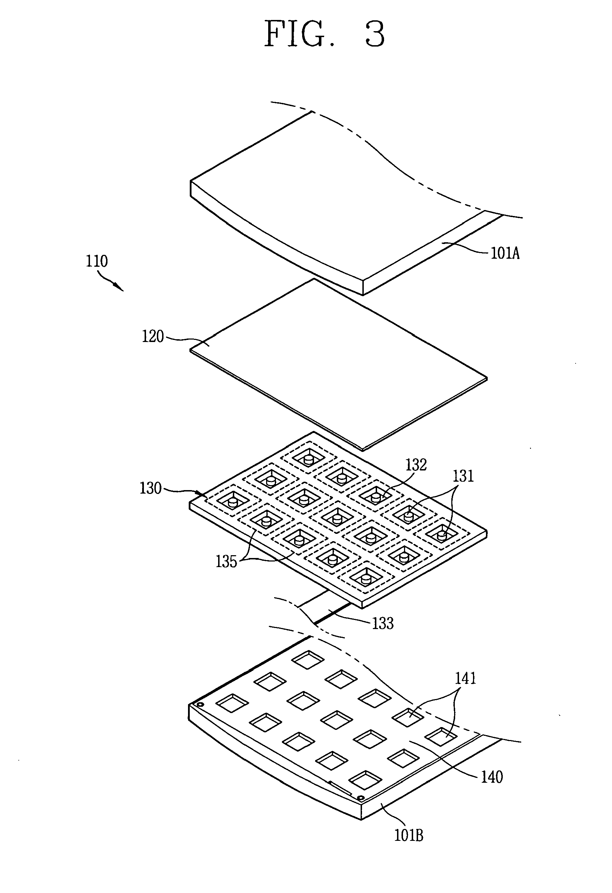

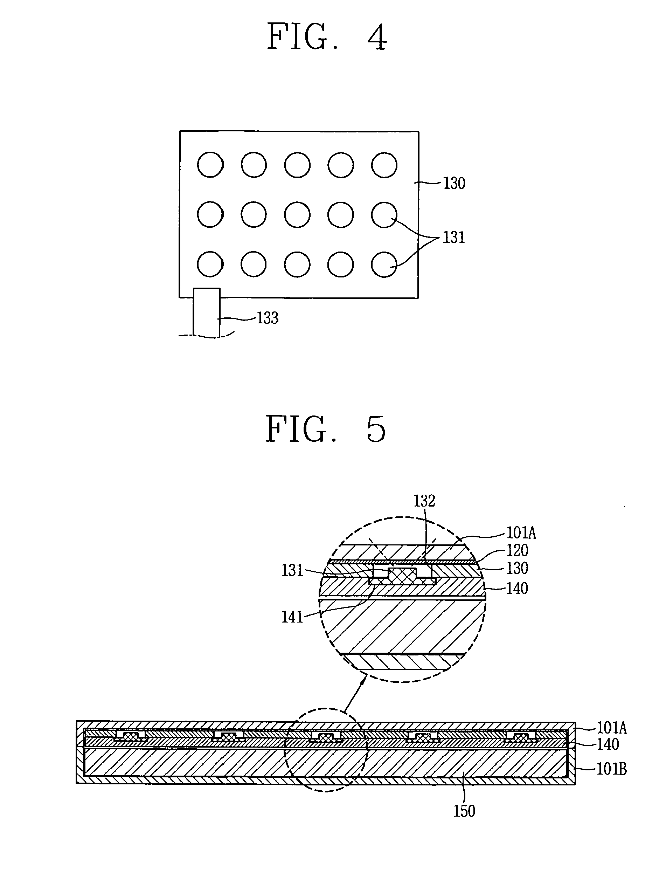

The structure of the input device according to the exemplary embodiment of the present invention is shown in FIGs. 3 to 5. FIG. 3 is an exploded perspective view of the input device of the mobile terminal in FIG. 2, FIG. 4 is a rear view of a touch board in FIG .3, and FIG. 5 is a sectional view taken along line A-A of the mobile terminal in FIG. 2.

The input device 110 includes a cover 101A having at least one transmissive region, a touch board 130 disposed at a lower side of the cover 10A and sensing a touch applied to the cover 101A, and a plurality of light emitting units 131 positioned at a lower surface of the touch board 130.

The cover 101 A form the external appearance of the mobile terminal 100 together with a lower cover 101 B, and the transmissive region allows light generated from the lower light emitting units 131 to pass therethrough so as to be recognized by the user. The cover 101A can be made of a transparent or opaque resin material that can maintain durability over repetitive touches or a glass or ceramic material. In addition, the cover 101A can be integratedly formed with a window constituting the external appearance of the display unit 102.

The touch board 130 performs an input operation by sensing a touch applied to the cover 101 A.

The touch board 130 can be constructed in such a form suitable for sensing a change in capacitance of a touched portion of the cover 101A and being operated accordingly. Also, the touch board 130 can be implemented to sense pressure of a finger of the user applied to the cover 101A and be operated accordingly.

As shown in FIG. 3, the touch board 130 includes a plurality of touch regions 135 arranged geometrically. Namely, a touch signal sensed within a single touch region 135 can be recognized as the same signal. The gaps between touch regions 135 can be controlled.

The light emitting units 131 can be mounted on the lower surface of the touch board 130, whereby the touch board 130 can be modularized with the light emitting unit 131 and controlled through a single connection unit 133, and thus, the components can be reduced and the overall volume can be also reduced. The connection unit 133 can be formed as an FPCB (Flexible PCB).

The light emitting units 131 may make a certain arrangement, and in FIG. 3, they have a 3x5 matrix form. In addition, the light emitting units 131 can be arranged in an arbitrary matrix form of MxN (M and N are natural numbers of 2 or greater). The number and disposition of the light emitting units 131 can be controlled to have a geometrical shape such as a triangular shape, a circular shape, a cross shape or a ring shape.

Each portion of the light emitting units 131 includes a light guide 132 corresponding to each light emitting unit 131. In FIG. 5, the light guide 132 is provided in the form of a through hole for each light emitting unit 131, and the light emitting unit 131 can be at least partially received in each through hole. The light guide 132 can be also provided in such a form that the through holes can be filled with a filler made of a transmissive material.

As shown in FIG. 5, the light emitting units 131 can be mounted in a reverse type such that they are positioned at a lower side of the touch sensing unit 130 and partially received in the light guide 132. As the light emitting units 131, LEDs with low power consumption can be used.

The touch board 130 is supported by a support plate 140 positioned at its lower side. A receiving hole 141 for partially receiving each light emitting unit 131 mounted at the lower side of the touch board 130 can be formed on an upper surface of the support plate 140 (refer to FIG. 3).

As shown in FIGs. 3 and 5, a diffusion member 120 is provided between the cover 101 A and the touch board 130 in order to allow light which has passed through the light guide 132 to be diffused therethrough to thus enter the cover 101 A. The diffusion member 120 can be formed such that particles or patterns that serve to cause light diffusion operation are added to a base material of a sheet type. Preferably, the diffusion member 120 can be formed as a double-sided adhesive tape for attaching the cover 101 A and the touch board 130.

Accordingly, the diffusion member 120 can improve the phenomenon that because the light emitting units 131 are mounted to be close to the cover 101A, particular portions are excessively light while other portions are relatively dark, generating light bright spots, and uniformly distribute light to implement an overall smooth illumination effect.

The diffusion member 120 can be formed with an area that can cover at least the touch board 130, and in this case, the touch board 130 or the light emitting units 131 may not be seen.

A print layer having a character, a number of a symbol can be formed between the cover 101A and the diffusion member 120 so as for the user to discern an input key through the cover 101 A. In order to engrave a character, a number or a symbol, a transmissive resin sheet (not shown) is disposed between the cover 101A and the diffusion member 120 and the character, the number or the symbol can be printed on the transmissive resin sheet or can be etched or shaped in an engraved or embossed form on lower or upper surfaces of the cover 101 A. In addition, the diffusion member 120 itself can be formed in characters, numbers or symbols, so as to be discernible.

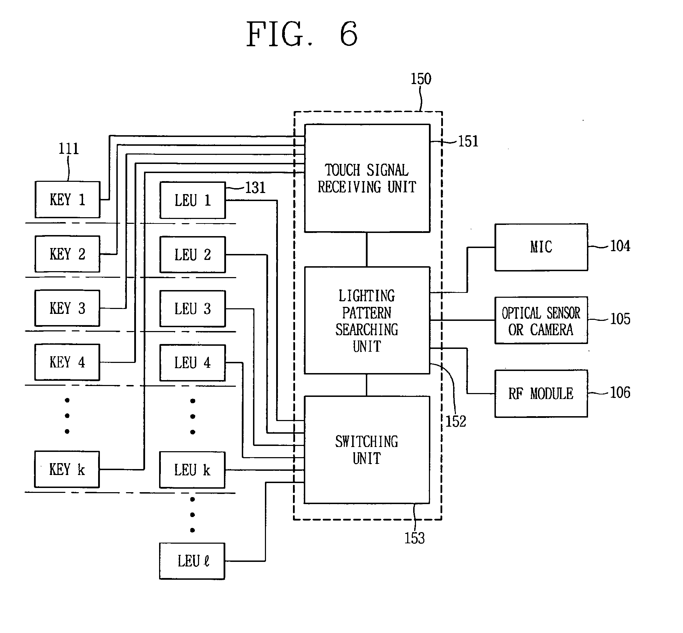

FIG. 6 is a control block diagram of the input device according to the first exemplary embodiment of the present invention. As shown in FIG. 6, the input device 110 includes an individual illumination unit 150 that turns on or off one or two or more of the light emitting units 131 to allow light to be seen through the transmissive region of the cover 101 A, while performing an inputting operation by a touch.

The number of light emitting units 131 (light emitting unit 1 to light emitting unit k) can be equal to the available number of keys 111 (key 1 to key k). Alternatively, a larger number of light emitting units 131 (light emitting unit 1 to light emitting unit I) can be provided.

The individual illumination unit 150 includes a touch signal receiving part 151 that receives a signal from the touch board 130 and fetches a corresponding position and a discernment value, an illumination pattern searching part 152 that fetches an illumination pattern of a light emitting unit 131 corresponding to the signal fetched by the touch signal receiving part 151, and an ON/OFF signal applying part 153 that applies an ON/OFF signal to the light emitting units 131 corresponding to the illumination pattern among the light emitting units 131.

The touch signal receiving part 151 is connected with each key 111, and when an arbitrary key 111 is touched, the touch signal receiving part 151 applies a corresponding signal to the illumination pattern searching part 152.

The illumination pattern fetched by the illumination pattern searching part 152 can be previously set or can be generated or changed by the user.

The illumination pattern can be generated by one of a position, an ON/OFF time and brightness, or by a combination of them. Namely, which light emitting unit is to be turned on, with which strength a light emitting unit is to be turned on, and how long a light emitting unit is to be operated (in this case, an illumination effect of turning off or on or gradually brightening or darkening can be expected) can be set according to a particular concept.

Each light emitting unit 131 can be formed to implement multiple colors, and in this case, the discernment signal provided to the user can be generated by one of color, position, an ON/OFF time and brightness or a combination of them.

The illumination pattern can be set to be changed according to various usage modes such as when the mobile terminal 100 performs call communication, inputs a character or a number, plays music in case having a music play function, performs photographing in case of having a camera, and reproduces video, and when the user watches a broadcast in case of having a broadcast reception function. In this case, the illumination pattern can be set to illuminate keys used for the corresponding mode to offer guidance. Namely, the operable keys are discerned by light.

In the exemplary embodiment of the present invention, the illumination pattern searching part 152 may control the light emitting units selected by the illumination pattern previously set or set later according to a voice signal inputted to the microphone 104, a light signal inputted to the optical sensor or the camera 105, or a radiowave signal received by a wireless communication module 106 that handles receiving of a call or a message.

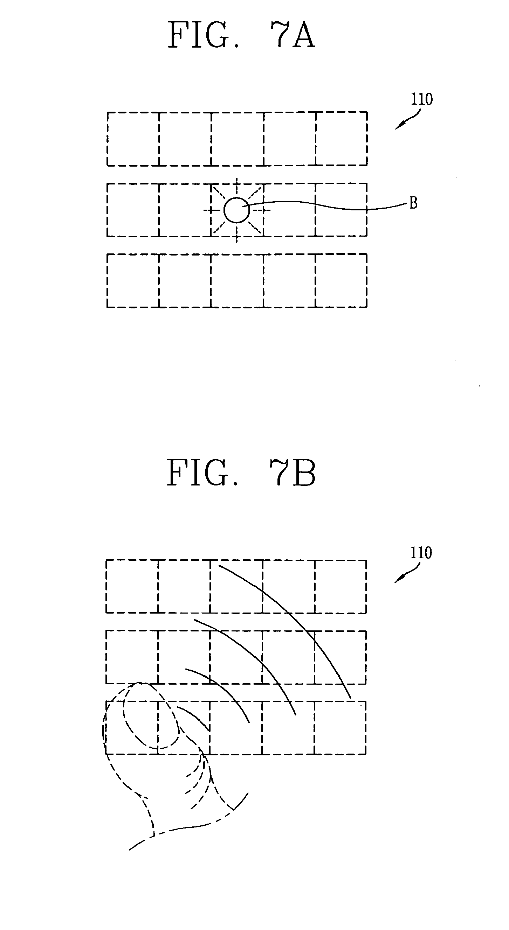

FIGs. 7A to 7D are conceptual views of providing a discernment signal to a user by key illumination according to the exemplary embodiment of the present invention.

With reference to FIG. 7A, the input device 110 can be set to show a state of the mobile terminal to the user by illuminating a particular portion. For example, when the mobile terminal is in an ON state while the display 102 is in an OFF state, light (B) of a particular position indicates a standby state.

In this case, the light (B) can have an effect of being periodically brightened or darkened to make the user feel comfortable and familiar. In addition, the light (B) indicating the standby state can reduce a driving time of the display unit 102, to thus reduce power consumption.

FIG. 7B shows visual implementation of waves such that when the user touches a particular position of the input device 110 by using the finger, light emitting units starting from those positioned at the particular position to those positioned away therefrom are sequentially turned on and off.

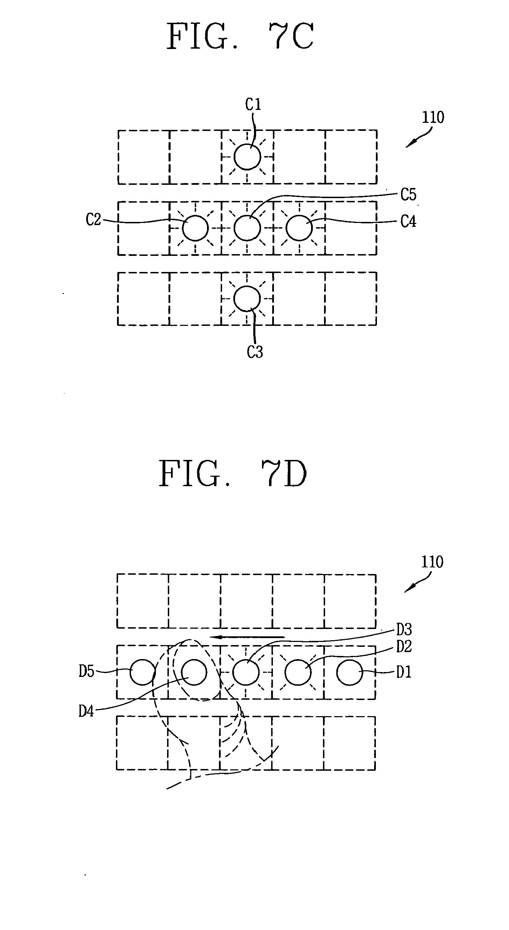

FIG. 7C shows a case that only available keys are illuminated in a particular mode. Namely, the illuminated keys C1 to C4 are assigned as keys (direction control keys) for shifting a pointer up, down, left and right, and a key C5 is assigned as an 'OK' key. The overall positions and gaps of the keys C1 to C5 can be set to vary.

The effects of touching the keys C1 to C5 can be implemented in various forms. For example, when one of the keys C1 to C5 is touched, the key can be recognized by the user in a different form (a change in color, blinking or being brighter) from other keys.

FIG. 7D shows a case that as touches by the user move in a particular direction, the light emitting units at the contacted positions are turned on and then gradually turned off, providing a trail effect.

In particular, the directional movement of the touches can be combined with a scroll function allowing the cursor or the pointer to be shifted quickly to thus maximize the lighting effect.

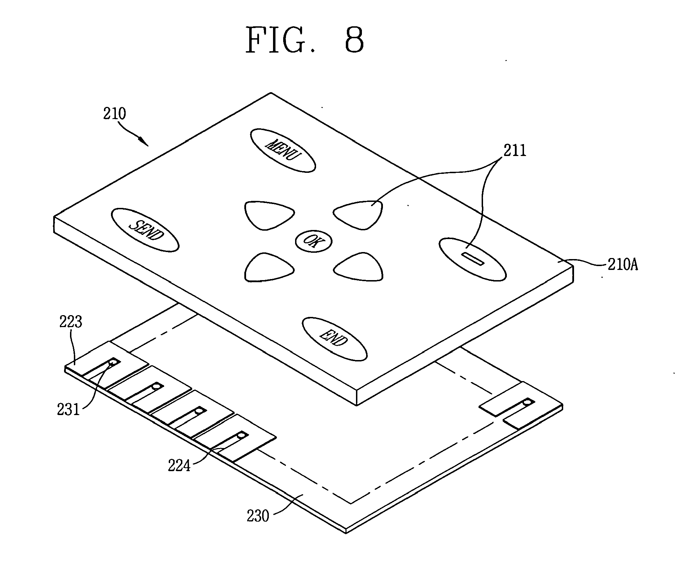

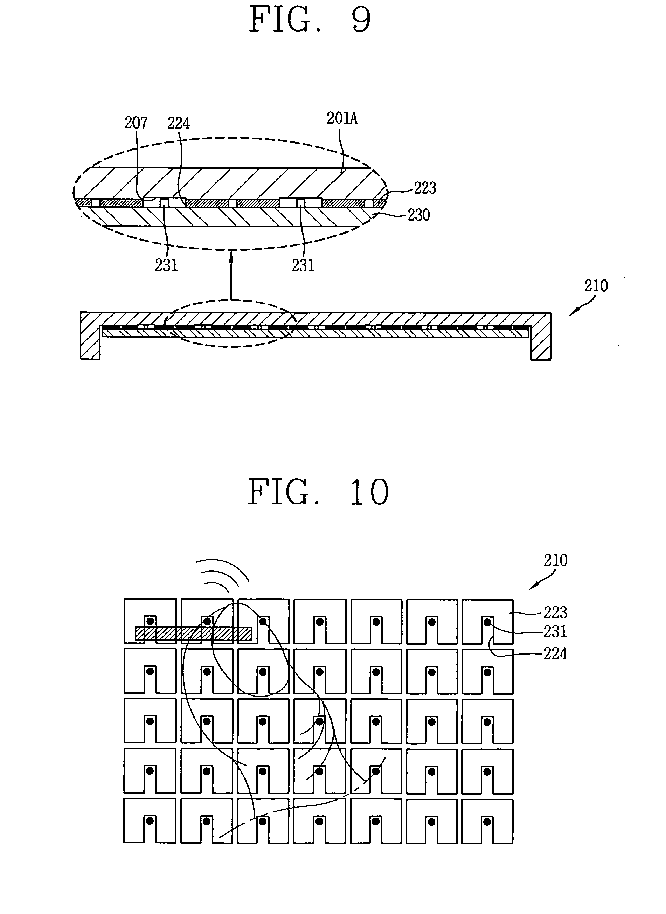

FIG. 8 is an exploded perspective view of an input device according to a second exemplary embodiment of the present invention, FIG. 9 is a sectional view of the input device in FIG. 8, and FIG. 10 shows an operational state of the input device in FIG. 8.

With reference to FIGs. 8 and 9, the input device includes a touch board 230 with light emitting units 231 mounted on its upper surface, and intermediate members 223 are provided to surround the light emitting units 231 on the touch board.

A cover 201 a is disposed at an upper side of the intermediate members 223, and when an arbitrary key 211 is touched, a corresponding signal can be recognized by the touch board 230 and a corresponding input can be made.

The light emitting units 231 are disposed to be more densely that that of the former exemplary embodiment of the present invention, and light can be irradiated to a partial region of the cover 201 A by the intermediate members 223 surrounding the light emitting units 231.

With reference to FIG. 9, receiving recesses 207 for receiving the light emitting units 231 are formed with a certain depth on the lower surface of the cover 201A. Accordingly, received in the receiving recesses 207, the light emitting units 231, that can be protruded to an upper side of the intermediate member 223, can maintain a certain distance from the cover 201A without contacting the cover 201A.

The intermediate member 223 includes through holes 224 for providing a space in which the light emitting units 231 can be received. The through holes 224 allows light emitted from the light emitting units 231 to be irradiated only to a certain region of the cover 201 A.

For example, when light is to be irradiated only to a region where a mark 'MENU' is positioned, only the light emitting unit(s) positioned at a lower portion of the region emits light, and when light is to be irradiated only to a region where a mark 'SEND' is positioned, only the light emitting unit(s) positioned at a lower portion of the region emits light. The same goes for a region where a mark '□' which means left shifting is positioned and for a region where a mark 'OK' which means confirmation is positioned.

The intermediate member 223 is not limited to a particular shape. Namely, it can be formed as a thin sheet and have an arbitrary shape such as a circular shape or a polygonal shape. The intermediate member 223 can be formed to be thinner than the height of the light emitting unit 231, and in this case, the overall thickness of the input device 210 can be reduced.

With such a construction, as shown in FIG. 10, an input device 210 having light emitting units 231 of 5x7 matrix. When user's finger contacts on or moves to a particular position of the light emitting units 231, the corresponding light emitting unit or light emitting units at other positions emit light, obtaining an illumination effect.

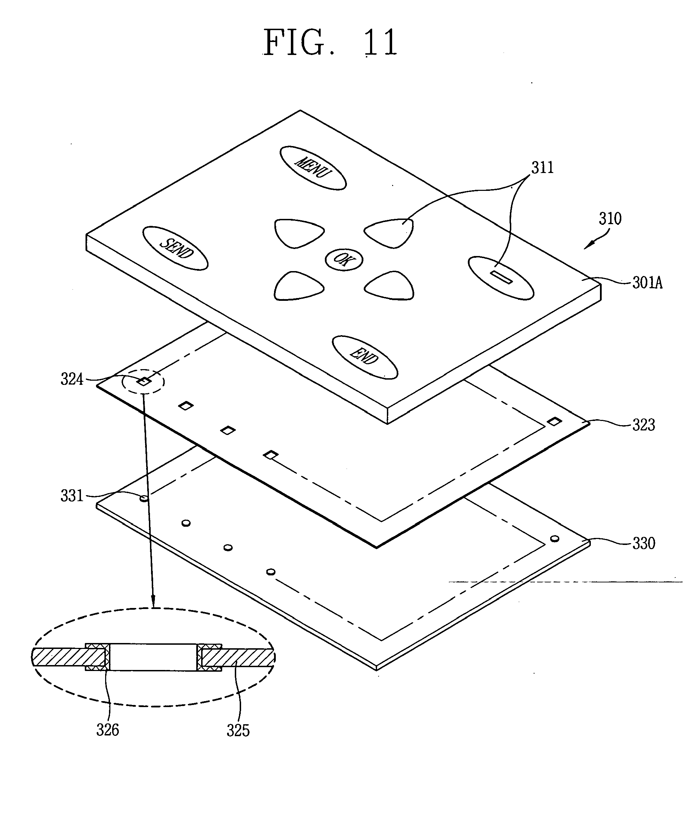

FIG. 11 is an exploded perspective view of the input device according to a third exemplary embodiment of the present invention. Similarly to those in the former exemplary embodiments, an input device 310 includes a touch board 330, an intermediate member 323, and light emitting units 331 and a cover 301A. Herein, the intermediate member 323 includes a plate 325 having through holes 324 providing a space in which the light emitting units 331 are received, and signal transmission members 326 formed on an inner wall of the through holes 324 and transferring an electrical signal generated by a touch applied to the cover 3031 A to the touch board 330.

The plate 325 can be made of a material that cannot electrically transfer a signal, while the signal transmission members 326 are made of a material that can electrically transfer a signal. Accordingly, the plate 325 can guide light generated from the light emitting units 331 to a partial region of the cover, and the signal transmission member 326 transfers an electrical signal such as static electricity generated by a display window and a user contact to the touch board 330.

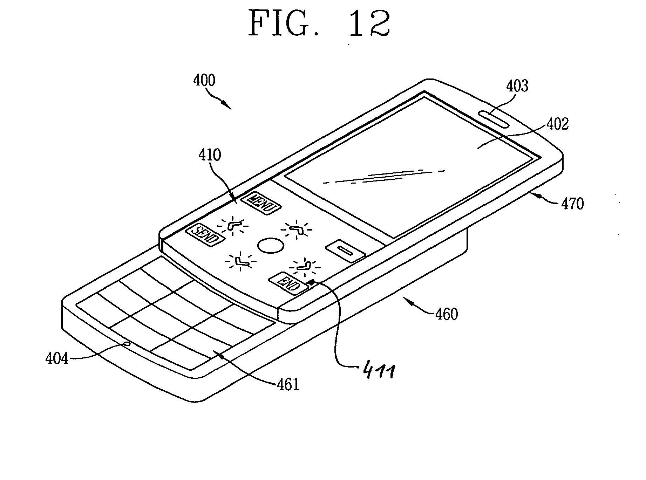

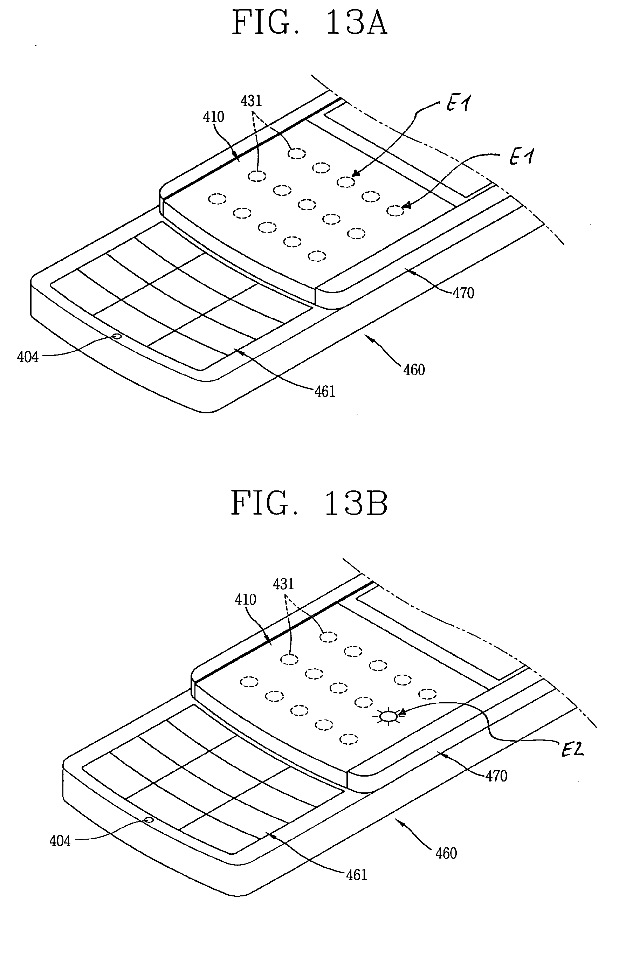

FIG. 12 is a perspective view of a slide type mobile terminal with an input device according to a fourth exemplary embodiment of the present invention, and FIGs. 13A and 13B show operational states of a keypad in FIG. 12.

As shown, an input device 410 is applied for a mobile terminal 400 including a first body on which a keypad 461 is installed and a second body 470 slidably connected with respect to the first body 460.

The input device 410 includes keys 411 with particular marks. Each key 411 can be formed by a printing method or an engraving and embossing method as mentioned above. Each key 411 includes a corresponding light emitting unit. The disposition and operation of the light emitting units are similar to those in the former exemplary embodiments of the present invention, so its detailed description will be omitted.

The keypad 410 can be set to at least partially implement the above-described embodiments.

As shown in FIG. 13A, all the keys (E1) are set to be in an ON state in a standby mode, and comparatively, as shown in FIG. 13B, the keys can be set such that when a particular key is touched, only the corresponding key (E2) can be illuminated.

In addition, one or more light emitting units can be disposed within a portion with no key. In this case, it can serve to perform a different function.

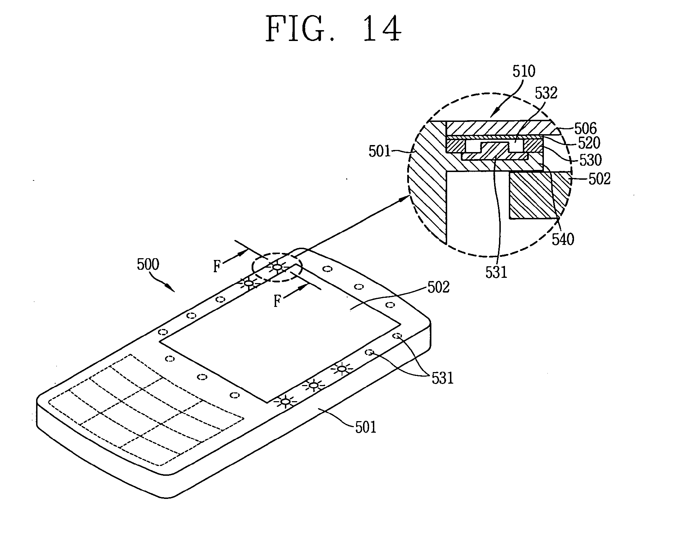

FIG. 14 shows a fifth exemplary embodiment of the present invention. With reference to FIG. 14, a mobile terminal 500 includes a terminal body 501 on which a display unit 502 is provided on its front surface, and an input device 510 having an individual illumination function is installed around the display unit 502.

Light emitting units 531 are disposed in the form of a single line or multiple lines along the edges of the display unit 502.

The input device 510 includes a transmissive cover 506 positioned at an outer side of the display unit 502 and protecting the display unit 502. The cover 506 is mounted by the terminal body 501 and a support 540.

A diffusion member 520 and a touch sensing unit 530 can be sequentially positioned at a lower side of the cover 506, and a plurality of light emitting units 531 can be mounted below the touch sensing unit 530.

The light emitting unit 531 is disposed to be at least partially received in a light guide 532 formed at the touch sensing unit 530.

With such a construction, the light emitting unit 531 can provide a signal such as an illumination position, color, time (blinking), etc., to the user in response to a touch or a different input signal, creating a more active environment.

As so far described, the input device and the mobile terminal having the same according to the present invention have such an advantage that because the plurality of light emitting units and the individual illumination unit for controlling the light emitting units provide various discernible information to users, improving user convenience.

## Claims

1. A mobile terminal, comprising:
- an array of light emitting units (231);
- a light-transmissive cover (201 A) disposed to cover the array of light emitting units (231);
- a touch-sensitive board (230) provided in the placement area of the array of light emitting units (231) under the cover (201 A), the touch-sensitive board (230) configured to generate a signal in response to a touch applied to the cover (201A), the signal indicative of the location of the touch on the cover (201A);
- illumination control means arranged to control the array of light emitting units (231) in response to the signal from the touch-sensitive board (230) so as to drive a part group of at least two of the light emitting units (231) disposed in proximity to the touched location into a first illumination state and the remaining light emitting units (231) of the array into a different, second illumination state.

2. A mobile terminal, optionally according to claim 1, comprising:
- an array of light emitting units (431);
- a light-transmissive cover disposed to cover the array of light emitting units (431);
- a touch-sensitive board provided in the placement area of the array of light emitting units (431) under the cover, the touch-sensitive board configured to generate a signal in response to a touch applied to the cover, the signal indicative of the location of the touch on the cover;
- illumination control means arranged to drive the light emitting units (431) of the array into a lit up illumination state in a standby mode of the mobile terminal and control the array of light emitting units (431) in response to the signal from the touch-sensitive board (230) so as to drive one or more of the light emitting units (431) disposed in proximity to the touched location into a first lit up illumination state and the remaining light emitting units (431) of the array into a switched off state or a second, different lit up illumination state.

3. A mobile terminal, optionally according to claim 1 or 2, comprising:
- an array of light emitting units (131);
- a light-transmissive cover (101A) disposed to cover the array of light emitting units (131);
- a touch-sensitive board (130) provided in the placement area of the array of light emitting units (131) under the cover (101A), the touch-sensitive board (130) configured to generate a signal in response to a touch applied to the cover (101A), the signal indicative of the location of the touch on the cover (101A);
- illumination control means arranged to control the array of light emitting units (131) in response to the signal from the touch-sensitive board (130) so as to turn on and off a plurality of light emitting units (131) of the array with at least partially different delays from the time point of touch of the cover.

4. The mobile terminal of claim 3 wherein the delay is smaller for a light emitting unit (131) closer to the touched location and larger for a light emitting unit (131) farther away from the touched location.

5. The mobile terminal of claim 3 or 4 wherein the delays are set so as to create an illumination pattern of one or more lines or waves propagating from the touched location.

6. A mobile terminal, optionally according to any one of claims 1 to 5, comprising:
- an array of light emitting units (131);
- a light-transmissive cover (101A) disposed to cover the array of light emitting units (131);
- a touch-sensitive board (130) provided in the placement area of the array of light emitting units (131) under the cover (101A), the touch-sensitive board (130) configured to generate a signal in response to a touch applied to the cover (101A), the signal indicative of the location of the touch on the cover (101A), wherein the touch-sensitive board (130) defines a plurality of touch keys each associated with a different area of the touch-sensitive board;
- a display unit;
- illumination control means arranged to drive a part number of the light emitting units (C1 - C5) of the array into a first lit up illumination state and the remaining light emitting units of the array into a switched off state in a predetermined usage mode of the mobile terminal, the number and location of the lit up light emitting units (C1 - C5) defining an illumination pattern of the array.

7. The mobile terminal of claim 6 wherein the illumination control means is arranged to drive the light emitting units of the array according to different illumination patterns in different usage modes of the mobile terminal.

8. The mobile terminal of claim 6 or 7 wherein one or more of the following usage modes are available for the terminal: a call communication mode, a photographing mode, a play mode for playing music, a video reproducing mode, and a broadcast reception mode.

9. The mobile terminal of any one of claims 6 to 8, wherein the predetermined usage mode is **characterized by** a movable pointer being displayed on the displayed unit, the lit up light emitting units (C1 - C5) located in areas of the touch-sensitive board corresponding to direction keys used for shifting the displayed pointer in one or more directions, wherein the illumination control means is further arranged to respond to a signal from the touch-sensitive board (130) generated by a touch of one of the direction keys by driving one or more light emitting units located in the proximity of the touched direction key into a second lit up illumination state different from the first lit up illumination state while maintaining the remaining lit up light emitting units in the first illumination state.

10. A mobile terminal, optionally according to any one of claims 1 to 9, comprising:
- a terminal body (501);
- a display unit (502) provided at a large face of the terminal body;
- an array of light emitting units (531) provided alongside at least one edge of the display unit (502);
- a light-transmissive cover (506) disposed to cover the array of light emitting units (531);
- a touch-sensitive board (530) provided in the placement area of the array of light emitting units (531) under the cover (506), the touch-sensitive board (530) configured to generate a signal in response to a touch applied to the cover (506), the signal indicative of the location of the touch on the cover (506);
- illumination control means arranged to control the array of light emitting units (531) in response to the signal from the touch-sensitive board (530) so as to drive one or more light emitting units (531) disposed in proximity to the touched location into a first illumination state and the remaining light emitting units (531) of the array into a different, second illumination state.

11. The mobile terminal of claim 10 wherein the light emitting units (531) of the array are arranged in one or more lines alongside every edge of the display unit.

12. The mobile terminal of claim 10 or 11, further comprising an alphanumeric input pad provided in an area of the terminal different from the area of placement of the array of light emitting units (531) and preferably provided at the same face of the terminal body as the display unit (502).

13. A mobile terminal, optionally according to any one of claims 1 to 12, comprising:
- an array of light emitting units (131; 531);
- a light-transmissive cover (101A; 506) disposed to cover the array of light emitting units (131; 531);
- a touch-sensitive board (130; 530) provided in the placement area of the array of light emitting units (131; 531) under the cover (101A; 506), the touch-sensitive board (130; 530) configured to generate a signal in response to a touch applied to the cover (101A; 506), the signal indicative of the location of the touch on the cover (101A; 506);
wherein the light emitting units (131; 531) are mounted to the touch-sensitive board (130; 530).

14. The mobile terminal of claim 13 wherein the light emitting units (131; 531) extend into respective light-guiding holes (132; 532) of the touch-sensitive board (130; 530).

15. The mobile terminal of claim 14 wherein the light emitting units (131; 531) are attached to an underside of the touch-sensitive board (130; 530) and extend into the light-guiding holes (132; 532) so as not to protrude beyond an upper side of the touch-sensitive board (130; 530).

16. The mobile terminal of any one of claims 13 to 15 wherein the touch-sensitive board (130; 530) is supported by a support member (140; 540), the support member provided with recesses (141) at its surface facing the touch-sensitive board (130; 530) for receiving the light emitting units (131; 531) in the recesses (141).

17. The mobile terminal of any one of claims 13 to 16, further comprising a diffusion member (120; 520) interposed between the cover (101A; 506) and the touch-sensitive board (130; 530) for diffusing light emitted by any one light emitting unit (131; 531) of the array.

18. The mobile terminal of claim 17 wherein the diffusion member (120; 520) is formed as a double-sided adhesive tape extending over the array of light emitting units (131; 531) and attaching at respective sides to the cover (101A; 506) and the touch-sensitive board (130; 530).

19. The mobile terminal of any one of claims 14 to 18, wherein the light-guiding holes (132; 532) are filled with a transparent material.

20. A mobile terminal, optionally according to any one of claims 1 to 19, comprising:
- an array of light emitting units (231; 331);
- a light-transmissive cover (201A; 301A) disposed to cover the array of light emitting units (231; 331);
- a touch-sensitive board (230; 330) provided in the placement area of the array of light emitting units (231; 331) under the cover (201A; 301A), the touch-sensitive board (230; 330) configured to generate a signal in response to a touch applied to the cover (201A; 301A), the signal indicative of the location of the touch on the cover (201 A; 301 A);
- one or more intermediate members (223; 323) interposed between the cover (201A; 301A) and the touch-sensitive board (230; 330);
wherein the light emitting units (231; 331) are mounted to the touch-sensitive board (230; 330) and extend into respective through holes (224; 324) of the one or more intermediate members (223; 323).

21. The mobile terminal of claim 20 wherein each light emitting unit (231) has a respective intermediate member (223) associated therewith.

22. The mobile terminal of claim 20 wherein the one or more intermediate members (323) comprise a single intermediate plate (325) formed with the through holes (324), a signal transmission member (326) formed at an inner wall of each through hole (324) for transferring an electrical signal generated by a touch applied to the cover (301A) to the touch-sensitive board (330).

23. The mobile terminal of any one of claims 20 to 22 wherein the light emitting units (231) are attached to an upper side of the touch-sensitive board (230).

24. The mobile terminal of any one of claims 20 to 23 wherein the light emitting units (231) protrude beyond the one or more intermediate members (223) and extend into respective recesses (207) formed at an underside of the cover (201 A).

25. The mobile terminal of any one preceding claim wherein the light emitting units (131) each comprise one or more light emitting diodes.

26. The mobile terminal of any one preceding claim wherein the light emitting units (131) are arranged in a two-dimensional matrix.

27. An input device, optionally for a mobile terminal according to any one preceding claim, comprising:
a cover having at least one transmissive region;
a touch board disposed within the cover and sensing a touch applied to the cover;
a plurality of light emitting units mounted on the touch board; and
an individual illumination unit for turning on or off one or two or more of the light emitting units by the touch to be seen at the transmissive region of the cover.

28. The device of claim 27, wherein the cover comprises an input key for inputting information, wherein visual recognition of the input key is enabled by a print layer formed on a lower surface of the cover and provided with a printed character, number or symbol, or by a character, number or symbol engraved or embossed at an upper or lower surface of the cover.

29. The device of claim 27 or 28, wherein the individual illumination unit comprises:
a touch signal receiving unit that receives a signal of the touch board and fetches a corresponding position and a recognition value;
an illumination pattern searching unit that fetches an illumination pattern of a light emitting unit corresponding to the signal fetched by the touch signal receiving unit; and
an ON/OFF signal applying unit that applies an ON/OFF signal of light emissions corresponding to the illumination pattern.

30. The device of claim 29, wherein the illumination pattern is formed by one of position, ON/OFF time and brightness of the light emitting units or by a combination of them.

31. The device of claim 29 or 30, wherein the light emitting units are formed such that they implement multiple colors, and the discernment signal is generated according to a combination of color, position, ON/OFF time and brightness of the light emitting units.

32. The device of any one of claims 29 to 31, wherein the individual illumination unit changes an illumination pattern of the light emitting units according to a usage mode.

33. A mobile terminal including a terminal body and an input device according to any one of claims 27 to 32, the input device mounted on the terminal body.

34. The mobile terminal of claim 33, wherein the terminal body comprises a microphone that receives a voice signal and the individual illumination unit turns on or off one or more light emitting units selected according to the voice signal received by the microphone; and/or wherein the terminal body comprises an optical sensor or a camera that receives a light signal, and the individual illumination unit turns on or off one or more light emitting units selected by the light signal received by the optical sensor or the camera; and/or wherein the terminal body comprises a wireless communication module that receives a radiowave signal, and the individual illumination unit turns on or off one or more light emitting units selected according to the radiowave signal received by the wireless communication module.
